# EUROPÄISCHE PATENTSCHRIFT

(11) **EP 0 701 732 B1**
(45) Veröffentlichungstag und Bekanntmachung des Hinweises auf die Patenterteilung: **27.02.2002**
(21) Anmeldenummer: 95912069.2
(22) Anmeldetag: 27.03.1995
(51) Int. Cl.: G11B 33/04

(54) **VERFAHREN ZUR HERSTELLUNG VON VERPACKUNGEN FÜR SPEICHERMEDIEN**
PROCESS FOR PRODUCING PACKAGES FOR STORAGE MEDIA
PROCEDE DE FABRICATION D'EMBALLAGE POUR SUPPORTS DE MEMORISATION

(30) Priorität: 30.03.1994 DE 9405421 U; 13.09.1994 AT 1743949; 13.09.1994 AT 174249
(43) Veröffentlichungstag der Anmeldung: 20.03.1996
(73) Patentinhaber: Walch, Herbert, 6020 Innsbruck (AT)
(72) Erfinder: Walch, Herbert, 6020 Innsbruck (AT)
(74) Vertreter: Torggler, Paul Norbert, Dr.
(86) Internationale Anmeldenummer: AT9500062
(87) Internationale Veröffentlichungsnummer: WO9527286

(56) Entgegenhaltungen:
- DE-U- 9 307 309
- US-A- 5 186 327

## Beschreibung

Die Erfindung betrifft ein Verfahren zur Herstellung von Verpackungen für Speichermedien, insbesondere optische Speicherplatten oder Disketten.

Weiters betrifft die Erfindung eine Verpackung für Speichermedien, insbesondere optische Speicherplatten öder Disketten, welche bevorzugt mit dem erfindungsgemäßen Verfahren herstellbar sind.

Unter Speichermedien werden hier insbesondere optische Speicherplatten (wie zB Audio-Compact-Discs (CD's), CD-I's und CD-ROM's) sowie Disketten (wie zB 3½ Zoll-Disketten) verstanden, welche bei Datenverarbeitungsanlagen zum Einsatz kommen.

Solche Speichermedien, insbesondere die Audio-CD's, wurden bisher in Kunststoffteilen verpackt, die nur schwer wiederverwertbar sind und somit keine umweltverträgliche Verpackung darstellen.

Die DE-U-9307309 zeigt bereits eine Verpackung für eine scheibenförmige optische Speicherplatte, insbesondere eine Compact-Disc, die aus Karton aufgebaut ist. Sie besteht im wesentlichen aus übereinander geklebten einzelnen Kartonlagen. Nachteilig ist die Tatsache, daß vor allem bei der Verwendung von kostengünstiger Wellpappe die Stirnseiten frei liegen und damit gegen Beschädigungen nicht geschützt sind. Außerdem ist eine stirnseitige Beschriftung schwer möglich.

Die US-A-5,186,327 zeigt ebenfalls eine Verpackung für Compact-Discs aus Karton. Auch diese Verpackung des Standes der Technik weist im wesentlichen dieselben Nachteile auf.

Eine Aufgabe der Erfindung besteht daher darin, ein Verfahren anzugeben, mit dem sich auf einfache Weise manuell oder maschinell umweltverträgliche Verpackungen herstellen lassen, die eine einfache Beschriftung erlauben und eine verbesserte Stabilität aufweisen.

Das erfindungsgemäße Verfahren ist durch folgende Schritte gekennzeichnet:
a) Bilden eines Bodenteiles aus einer oder mehreren verklebten Kartonschichten,
b) Bilden eines Umschlagteiles aus Karton,
c) Bilden eines Halte- und Aufnahmeteiles für das Speichermedium aus Karton,
d) Verkleben der so gebildeten Teile, wobei der Halte- und Aufnahmeteil über dem Bodenteil angeordnet wird und der Umschlagteil zumindest einen Teil der seitlichen Ränder von Halte- und Aufnahmeteil und/oder Bodenteil abdeckt.

Die erfindungsgemäße Verpackung für Speichermedien, insbesondere optische Speicherplatten oder Disketten, mit einem Träger aus mindestens einer Lage Karton mit einer Vertiefung zum Einlegen des Speichermediums, wobei der Träger vorzugsweise in eine beidseitig offene Hülle aus Karton einschiebbar ist, und wobei der Träger für das Speichermedium einen ein- oder mehrlagigen Bodenteil aus Karton und einen darüberliegenden, mit einer Vertiefung versehenen, ebenfalls ein- oder mehrlagigen Halteteil aus Karton aufweist, ist dadurch gekennzeichnet, daß der Träger weiters einen Umschlagteil aufweist, der unter dem Bodenteil verläuft und von dort um die Ränder des Bodenteils und zumindest teilweise des Halteteiles nach oben umgeschlagen und verklebt ist.

Durch die Verwendung von Karton kann der Einsatz von weniger umweltverträglichem Kunststoff vermieden werden. Dennoch lassen sich durch das erfindungsgemäße Verfahren Verpackungen rasch und problemlos auch maschinell herstellen. Diese Verpackungen zeichnen sich durch einen stabilen exakten Aufbau, eine gute Schutzwirkung für die darin verpackten Speichermedien, eine einfache Handhabung und schließlich durch einen optisch ansprechenden Eindruck aus.

Der um die Ränder des Bodenteiles und Halte- und Aufnahmeteiles umgeschlagene Umschlagteil deckt die seitlichen Ränder dieser Teile ab, was vor allem bei der Verwendung von Wellkarton (Wellpappe) von Vorteil ist, einerseits um das Eindringen von Schmutz und Feuchtigkeit in die offenen Kanäle der Wellpappe zu vermeiden, andererseits um die mechanische Stabilität des Randbereiches der Wellpappe zu erhöhen und außerdem den optischen Eindruck zu verbessern. Die Verwendung von Wellkarton bzw. Wellpappe hat den Vorteil, daß dieser bei größerer Dicke ein geringes Gewicht aufweist und sich leicht verarbeiten läßt, insbesondere kann nach der Vornahme von Ritzungen der Wellkarton leicht gefaltet werden. Um eine gerade Faltstelle zu erreichen, ist es besonders vorteilhaft, die Ritzung quer zum Wellenlauf des Wellkartons vorzunehmen.

Mit dem erfindungsgemäßen Verfahren lassen sich unter Verwendung verschiedenartiger Bodenteile, Umschlagteile und Halte- und Aufnahmeteile durch unterschiedliche Zusammenstellung derselben Verpackungen herstellen, die an den jeweiligen Einsatzzweck ideal angepaßt sind, beispielsweise Verpackungen für Audio-CD's mit und ohne Beipackheft, für Video-CD's und CD-ROM's mit und ohne Beipackheft oder für Disketten, insbesondere 3 1/2 Zoll-Disketten. Es ist somit möglich, unter Verwendung weniger Grundkomponenten verschiedenartigste Verpackungen ein und derselben Verpackungsfamilie herzustellen, insbesondere können die verschiedenen Verpackungen dieselben Außenmaße aufweisen, vorteilhaft jene, die bei den Plastikverpackungen von Audio-CD's üblich ist. Für ein Beipackheft wird günstigerweise ein Hohlraum vorgesehen, in dem das Beipackheft in üblichem Format 12 cm x 12 cm Platz hat. Die verschiedenen Verpackungen lassen sich grundsätzlich alle durch gleiche bzw. verwandte Verfahrensschritte eines erfindungsgemäßen Verfahrens herstellen.

Weitere Vorteile und Einzelheiten der Erfindung werden anhand der nachfolgenden Figurenbeschreibung näher erläutert.
- Fig. 1: zeigt eine perspektivische Ansicht eines Ausführungsbeispieles einer erfindungsgemäßen Verpackung für zwei 3 1/2 Zoll-Disketten
- Fig. 2: zeigt den Zuschnitt eines Umschlagteiles, wie er bei der Verpackung gemäß Fig. 1 zum Einsatz kommt,
- Fig 3: zeigt den Zuschnitt eines Bodenteiles für eine Verpackung gemäß Fig. 1,
- Fig. 4: zeigt den Zuschnitt eines Halte- und Aufnahmeteiles für eine Verpackung gemäß Fig. 1,
- Fig. 5: zeigt den Träger einer Verpackung für eine Video-CD oder CD-ROM in perspektivischer Darstellung,
- Fig. 6: zeigt den Zuschnitt des Bodenteiles für eine Verpackung gemäß Fig. 5 in einer Draufsicht,
- Fig. 7: zeigt den zusammengefalteten Bodenteil der Fig. 6 im Querschnitt,
- Fig. 8: zeigt den Zuschnitt eines Halte- und Aufnahmeteiles einer Verpackung gemäß Fig. 5,
- Fig. 9: zeigt einen Halte- und Aufnahmeteil für die Verpackung einer Audio-CD, wie sie in Fig. 11 dargestellt ist,
- Fig. 10: zeigt eine Draufsicht auf den Trägerteil dieser Verpackung (bei weggelassenem Klappdeckel),
- Fig. 11: zeigt eine perspektivische Ansicht des Trägerteiles einer Verpackung für eine Audio-CD mit geschlossenem Klappdeckel,
- Fig. 12: zeigt eine perspektivische Darstellung eines Trägers einer Verpackung für eine Video-CD oder CD-ROM mit einem Hohlraum für ein Beipackheft,
- Fig. 13: zeigt den Zuschnitt des Umschlagteiles für den in Fig. 12 gezeigten Träger,
- Fig. 14: zeigt den Zuschnitt für den Bodenteil des Trägers der Fig. 12,
- Fig. 15: zeigt den fertigen Bodenteil in einer Seitenansicht,
- Fig. 16: zeigt den Träger einer Verpackung für eine Audio-CD mit einem Hohlraum für ein Beipackheft in perspektivischer Darstellung mit geöffnetem Deckel,
- Fig. 17: zeigt den Umschlagteil einer Variante für eine Audio-CD im Zuschnitt,
- Fig. 18 und 19: zeigen den Bodenteil in einer Draufsicht und einer Seitenansicht,
- Fig. 20: zeigt den Zuschnitt für eine Hülle, in die ein Träger, wie er in den Fig. 1, 5, 11, 12 oder 16 dargestellt ist, eingeschoben werden kann,
- Fig. 21a bis 21c: zeigen den Verfahrensablauf zur Herstellung einer Hülle,
- Fig. 22: zeigt die fertige Hülle in einer perspektivischen Darstellung,
- Fig. 23: zeigt einen Träger eines Ausführungsbeispieles einer erfindungsgemäßen Verpackung ohne eingelegte Speicherplatte (CD),
- Fig. 24: zeigt eine Draufsicht auf den Träger mit eingelegter CD,
- Fig. 25: zeigt einen Schnitt nach A-A der Fig. 24,
- Fig. 26: zeigt die Herstellung eines weiteren Beispiels im Schnitt.

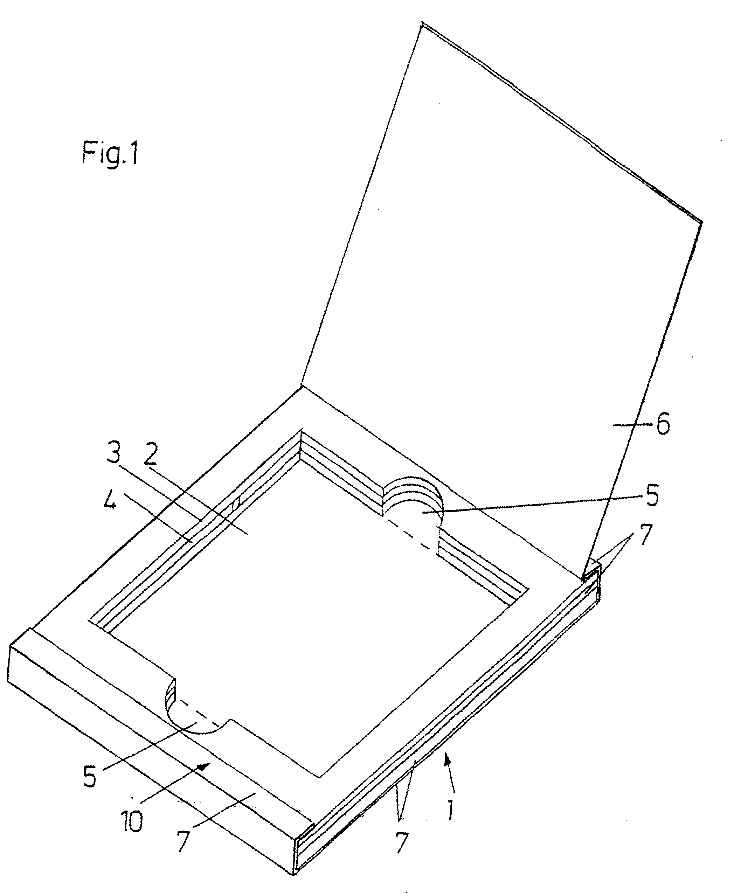

Der in Fig. 1 dargestellte Träger 1 einer erfindungsgemäßen Verpackung für Disketten besteht aus mehreren verklebten Kartonlagen. In der Mitte ist erfindungsgemäß eine Vertiefung 2 ausgebildet, in die beim dargestellten Ausführungsbeispiel zwei übereinanderliegende 3 1/2 Zoll-Disketten mit geringem seitlichen Spiel eingelegt werden können.

Die Vertiefung 2 wird durch die Innenränder der oberen Kartonlagen 3 und 4 seitlich begrenzt, welche zusammen einen Halte- und Aufnahmeteil für die eingelegte Diskette bilden.

Über zwei oder mehrere übereinanderliegende Lagen 3,4 mit fluchtenden Öffnungen kann eine Vertiefung gebildet werden, deren Tiefe größer ist als die Dicke einer Kartonlage, um auch zwei oder mehrere Disketten übereinander seitlich halten zu können.

Wie die Fig. 1 zeigt, ist die Vertiefung 2 in der Draufsicht im wesentlichen rechteckig, wobei zumindest eine Rechteckseite eine nach außen weisende, in der Draufsicht vorzugsweise halbkreisförmige Ausbuchtung 5 aufweist. Diese Ausbuchtungen 5 erlauben ein einfaches Herausnehmen der in der Vertiefung 2 parallel zu den Schichten bzw. Lagen 3 und 4 liegenden Disketten aus der Verpackung.

Über einen klappbaren Klappdeckel 6, der am Träger 1 gelagert ist, kann die Vertiefung 2 oben abgedeckt werden. Nach öffnen des Deckels 6 läßt sich die Diskette bzw. lassen sich die Disketten leicht entnehmen.

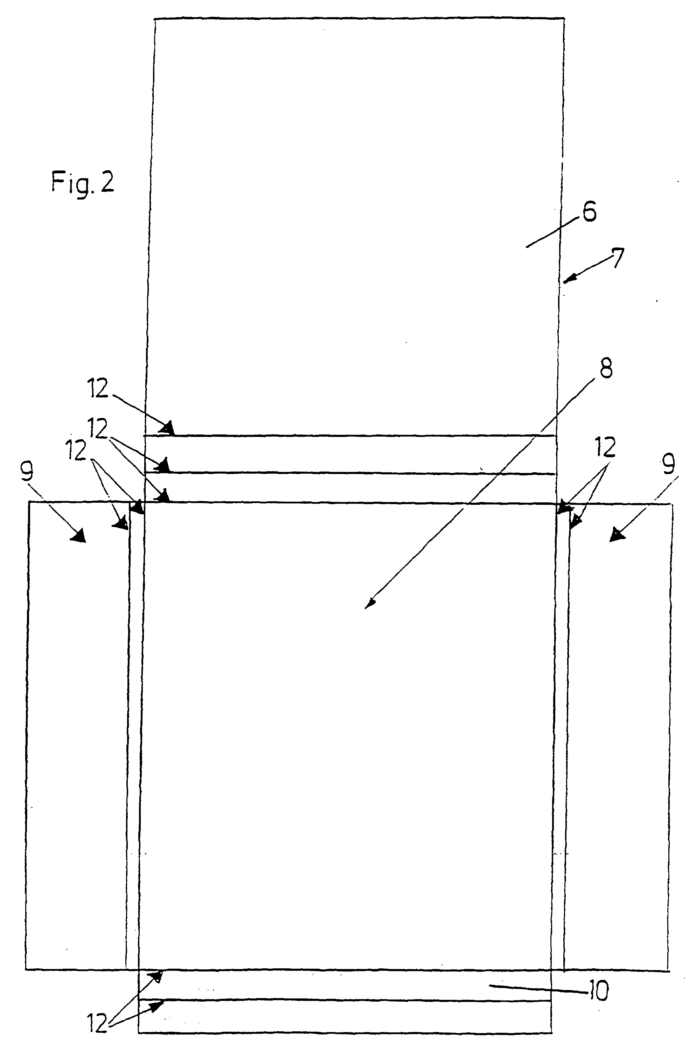

Der in Fig. 1 dargestellte Träger 1 besteht im wesentlichen aus drei Kartonteilen, die in den Fig. 2 bis 4 dargestellt sind und gemäß dem im folgenden beschriebenen Verfahren zusammengebaut werden.

Die äußerste Lage ist ein Umschlagteil 7 aus Karton, der den in Fig. 2 dargestellten Zuschnitt aufweist. Der Umschlagteil 7 weist einen Teil 6 auf, der später den Deckel bildet und einen Bodenabschnitt 8. Neben dem einseitig freien Lappen, der den Klappdeckel 6 für die Vertiefung 2 bildet, weist der Umschlagteil 7 noch drei weitere Lappen 9 und 10 auf. Die Funktion dieser Lappen wird im folgenden noch näher beschrieben.

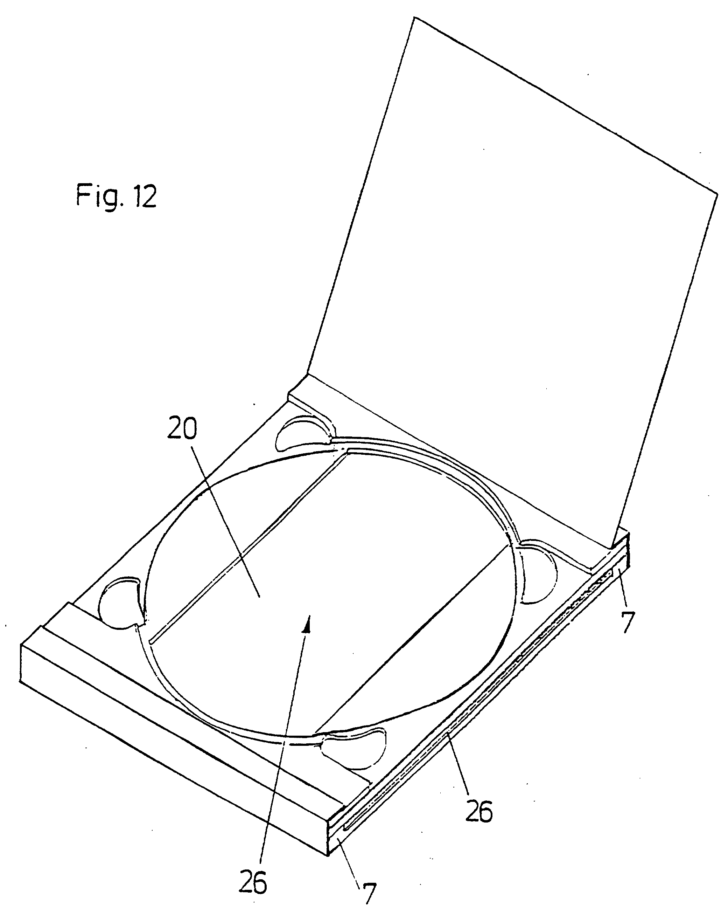

Der Umschlagteil wird vorteilhaft aus einem Kartonbogen ausgestanzt und im selben Arbeitsschritt an den zukünftigen Faltstellen 12 gerillt. Das Ausstanzen kann zweistufig erfolgen, wobei zunächst Schneidemesser der Stanze die in Fig. 12 dargestellte Kontur anschneiden und dann der Umschlagteil 7 durch eine Gegenstanze ausgebrochen wird. Der Umschlagteil kann vor Ausstanzen oder Ausschneiden im Offsetdruck bedruckt werden. Falls ein Karton mit einer Struktur verwendet wird, kann auch vorteilhaft ein Siebdruckverfahren verwendet werden.

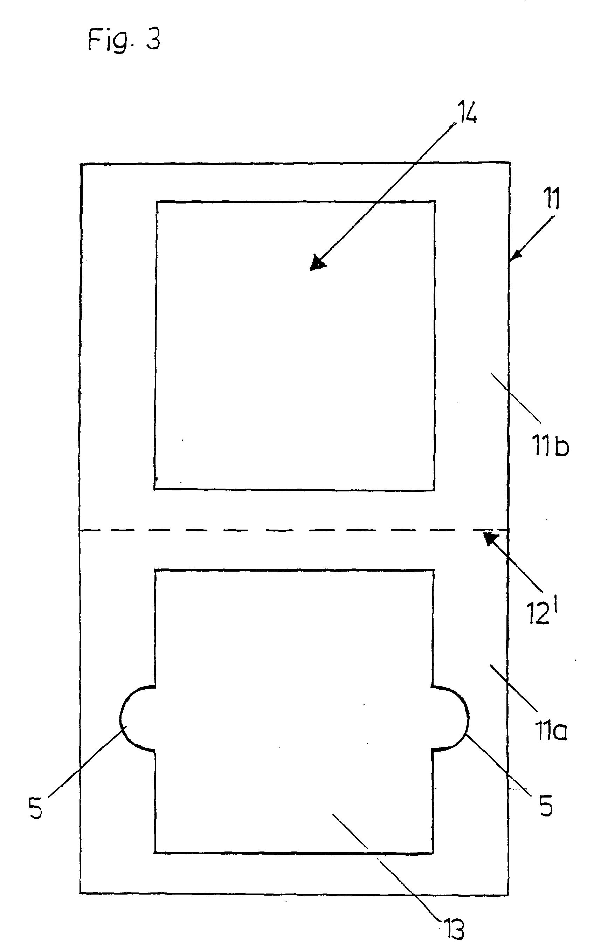

Als weiteren Teil weist der Träger 1 einen Bodenteil 11 auf, der in Fig. 3 dargestellt ist. Dieser Bodenteil 11 besteht aus einem rechteckigen Wellkarton (Wellpappe), der entlang der Linie 12' geritzt ist, um entlang dieser Linie zusammengefaltet zu werden. In dem Teil 11a ist eine im wesentlichen rechteckige Ausnehmung 13 mit halbkreisförmigen Ausbuchtungen 5 ausgestanzt. Im anderen Teil 11b wird mittels eines Prägestempels durch Prägen in den Karton ein abgesenkter Bereich 14 erzeugt. Die Tiefe dieses abgesenkten Bereiches 14 zusammen mit der Dicke des Teiles 11a und der Dicke der beiden Schichten 3 und 4 ergibt dann beim dargestellten Ausführungsbeispiel genau die Höhe von zwei 3 1/2 Zoll-Disketten, sodaß diese bündig mit der Oberfläche des Trägers 1 unter dem Deckel 6 abschließen.

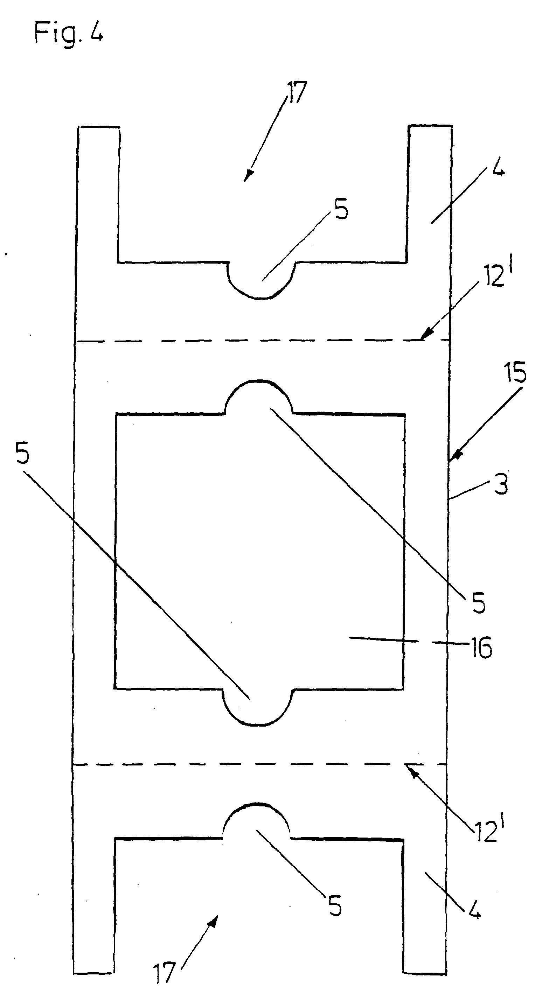

Als weiteren Teil weist der Träger 1 einen allgemein mit 15 bezeichneten Halteteil aus feiner Wellpappe auf, der in Fig. 4 dargestellt ist. In diesem Teil ist im mittleren Abschnitt eine Öffnung 16 mit seitlichen Ausbuchtungen 5 ausgestanzt. In den beiden äußeren Bereichen werden seitlich offene Öffnungen 17 ausgestanzt. Der Halte- und Aufnahmeteil 15 weist quer zur Längsrichtung der Wellen des Wellkartons verlaufende Ritzungen 12' auf, um die die beiden Seitenabschnitte 4 um 180° umgeklappt werden können, bis sie am Mittelteil 3 anliegen.

Die Teile der Fig. 2 bis 4 werden wie folgt zusammengesetzt: Nachdem der in Fig. 3 gezeigte Bodenteil 11 um die Ritzungslinie 12' um 180° zusammengefaltet worden ist, wird er auf den Bodenabschnitt 8 des Umschlagteiles 7 aufgeklebt.

Dabei ist es möglich, den Umschlagteil 7 über einer Senke anzuordnen, die etwas größer ist als die Außenabmessungen des Bodenabschnittes 8 bzw. des Bodenteiles 11. Hierauf kann man den Bodenteil von oben auf den Bodenabschnitt 8 des Umschlagteiles 7 drücken, wobei sich dieser in die Senke bewegt und dabei die vier Lappen 6, 9, 10 am Rand der Senke automatisch senkrecht nach oben geklappt werden und somit für eine Weiterverarbeitung bereits eine ideale Stellung haben.

Es können nun die beiden seitlichen Lappen 9 um die entlang der Linien 12 vorgerillten Stellen oben eingeschlagen werden und decken somit die seitlichen Ränder des Bodenteiles 11 ab.

Nun wird die Oberseite der umgeschlagenen Lappen 9 mit Klebstoff bestrichen und der zusammengefaltete Halteteil 15 aufgeklebt. Zum Schluß wird der Lappen 10 sowohl um den Bodenteil 11, als auch um den Halteteil 15 oben eingeschlagen und dort festgeklebt. Er deckt somit die Stirnkante vollständig ab, wie dies in Fig. 1 gezeigt ist. Auf der anderen Seite geschieht ähnliches. Hier wird der Lappen mit dem Deckel 6 ebenfalls nach oben umgeschlagen und oben festgeklebt.

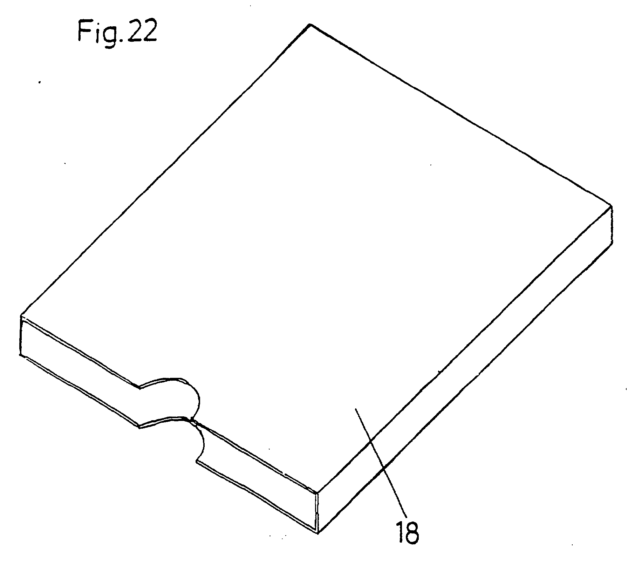

Der Träger kann dann einen elektromotorisch betriebenen Preßteppich durchlaufen, bis alle Kleber ausgehärtet sind. Schließlich kann der Träger 1 bei zugeklapptem Deckel in eine Hülle, wie sie in Fig. 22 gezeigt ist, eingeschoben werden. Diese Hülle 18 verhindert ein öffnen des Deckels 6 und schützt somit die im Träger untergebrachten Disketten zusätzlich.

Um die Aushärtzeit zu verringern, können thermoaktivierbare Kleber (Schmelzkleber = Hotmelt) verwendet werden. Allerdings hat sich gezeigt, daß solche Kleber eine weniger dauerhafte Verbindung ergeben. Deshalb ist es besonders vorteilhaft, gleichzeitig zwei Klebertypen zu verwenden, nämlich einen punktförmig aufgetragenen, thermoaktivierbaren Kleber, der sofort hält und einen flächig aufgetragenen Dispersionskleber, der eine dauerhafte Verbindung sicherstellt. Dies ist insbesondere bei der maschinellen raschen Fertigung von Vorteil. Sowohl bei der manuellen als auch bei der maschinellen Fertigung lassen sich die Teile (Umschlagteil 7, Bodenteil 11, Halte- und Aufnahmeteil 15) in vorgeschalteten Verfahrensschritten vorfertigen und beispielsweise auf Stapeln zwischenspeichern. Von solchen Stapeln kann dann händisch oder maschinell jeweils ein Teil abgenommen und auf die oben beschriebene Weise durch Falten, Umschlagen und Verkleben zu einem Träger für ein Speichermedium verarbeitet werden. Die einzelnen Teilschritte sind dabei verhältnismäßig einfach und können daher auch maschinell durchgeführt werden.

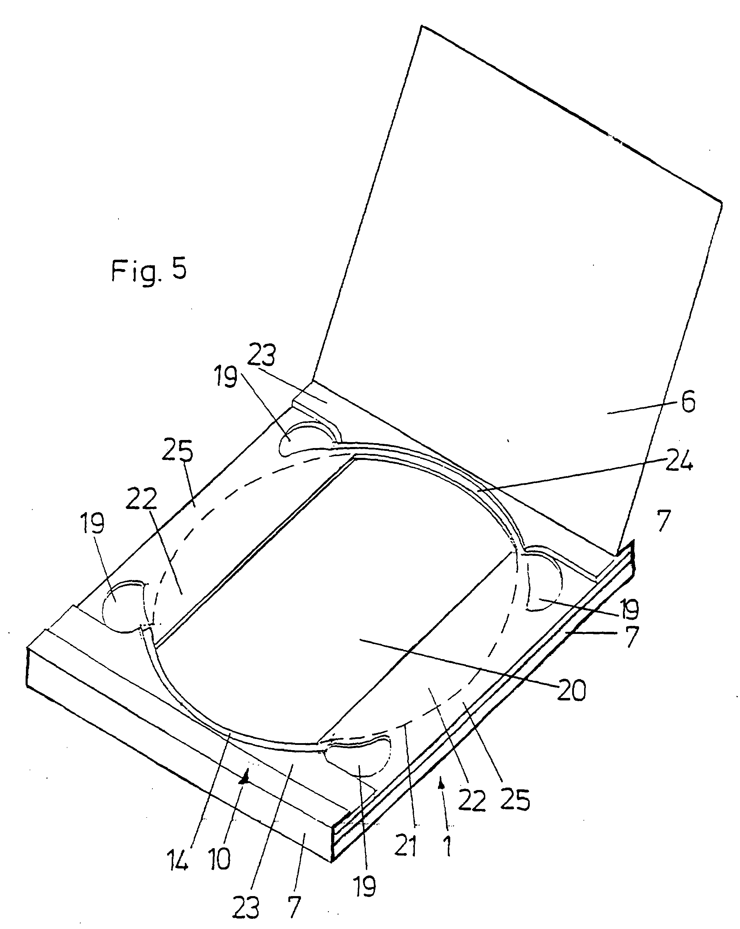

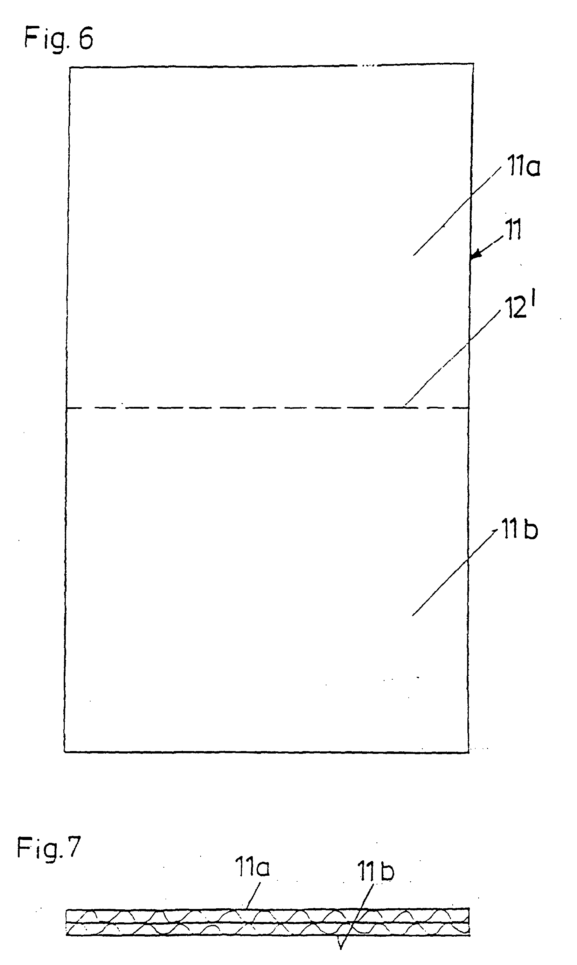

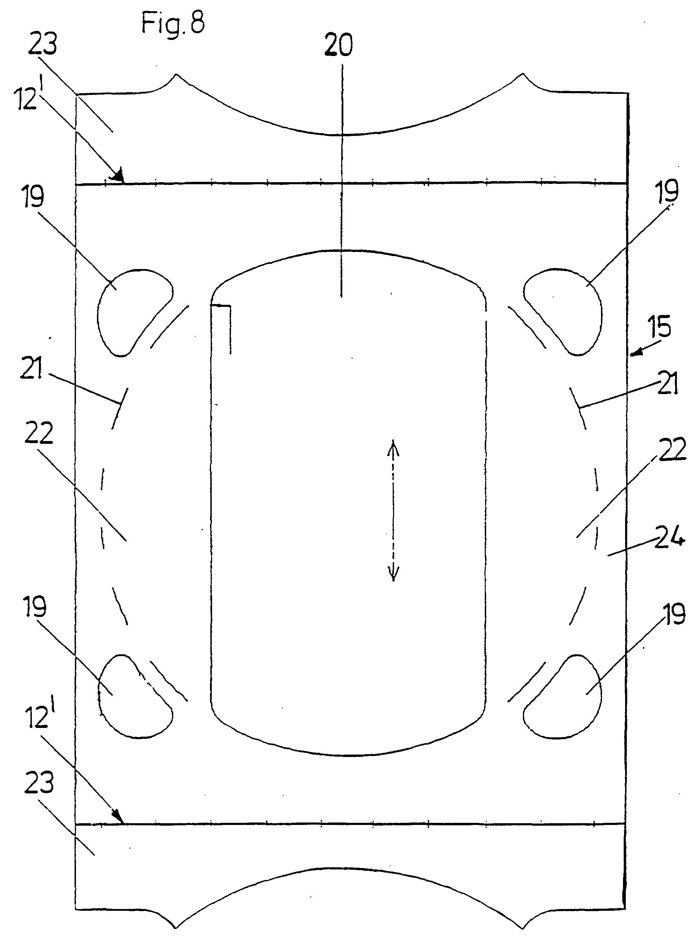

Während die Fig. 1 bis 4 einen Träger einer Verpackung für zwei 3 1/2 Zoll-Disketten gezeigt haben, ist in den Fig. 5 bis 8 ein Träger 1 für Video-CD's oder CD-ROM's mit empfindlichem Datenbereich beschrieben. Auch dieser in Fig. 5 gezeigte Träger 1 ist erfindungsgemäß aus einem Bodenteil 11 (Fig. 6, 7), einem Halte- und Aufnahmeteil 15 (Fig. 8) und einem Umschlagteil 7 aufgebaut, wobei der Umschlagteil 7 genau gleich wie der in Fig. 2 ausgebildet sein kann.

Auch der Herstellungsablauf ist gleich wie bei dem in den Fig. 1 bis 4 beschriebenen Ausführungsbeispiel. Zunächst werden die einzelnen Teile 7, 11, 15 gebildet. Der Teil 7 wurde bereits beschrieben. Bei dem in Fig. 6 gezeigten Teil 11 wird aus einem Wellkarton ein Rechteck ausgestanzt, entlang der Linie 12' geritzt und dann die beiden Teile 11a, 11b umgefaltet, um einen stabilen Bodenteil zu erlangen, wie er in Fig. 7 in einer Seitenansicht dargestellt ist.

Der in Fig. 8 im Zuschnitt dargestellte Halte- und Aufnahmeteil 15 wird aus einem feinen Microwellkarton ausgestanzt und entlang der Linien 12' gerillt. Beim Ausstanzen werden auch die Öffnungen 19 sowie die große zentrale Öffnung 20 ausgestanzt. Beim Ausstanzen oder bei einem darauffolgenden Arbeitsschritt kann mit Hilfe eines Prägestempels ein innerhalb der Linien 21 liegender kreisförmiger Bereich 22 im Karton eingedrückt werden, also ein gegenüber der sonstigen Oberfläche abgesenkter Bereich erzeugt werden.

Vor der Montage des Teiles 15 der Fig. 8 werden die beiden seitlichen Lappen 23 auf den Mittelteil 24 umgeschlagen und gegebenenfalls festgeklebt.

Der Zusammenbau zum Träger gemäß Fig. 5 erfolgt dann wieder durch Auflegen des Bodenteiles 11 auf den Umschlagteil 7 durch anschließendes Einklappen und Festkleben der Lappen 9 und darauffolgendes Festkleben des Aufnahme- und Halteteiles 15 der Fig. 8, worauf schließlich der Lappen 10 und der mit der Klappe 6 versehene Lappen des Umschlagteiles 7 auf der Oberseite des Aufnahme- und Halteteiles 15 (genauer auf dessen Lappen 23) festgeklebt wird.

Zwischen den Teilen 23 ergibt sich somit eine gegenüber deren Oberfläche abgesenkte Vertiefung, in die eine optische Speicherplatte, insbesondere eine Video-CD oder CD-ROM eingelegt werden kann. Die bogenförmigen Abschnitte der Lappen 23 halten dabei die CD zentriert im Träger 1. Die CD liegt nur mit ihrem äußersten Rand am Mittelteil 24 des Halte- und Aufnahmeteiles 15 auf. Im dazwischenliegenden Bereich befindet sich die Öffnung 20 und innerhalb der Linie 21 der durch Prägen abgesenkte Bereich 22. Durch die große Öffnung 20 kann das Material beim Prägen leicht verdrängt werden.

Die Öffnungen 19 bilden Griffmulden zum Herausnehmen der CD. Sie liegen vorteilhaft nicht am Rand des Trägers 1, womit sich seitlich durchgehende Stege 25 ergeben, die eine hohe Stabilität ergeben und auch beim Prägen nicht einknicken.

Insgesamt ist es mit der in Fig. 5 gezeigten Verpackung möglich, eine CD zu verpacken, ohne daß deren empfindlicher Datenbereich direkt auf Karton aufliegt. Dazu muß nur der Außendurchmesser des abgesenkten Bereiches 22 größer sein als der mit Daten versehene Bereich der optischen Speicherplatte.

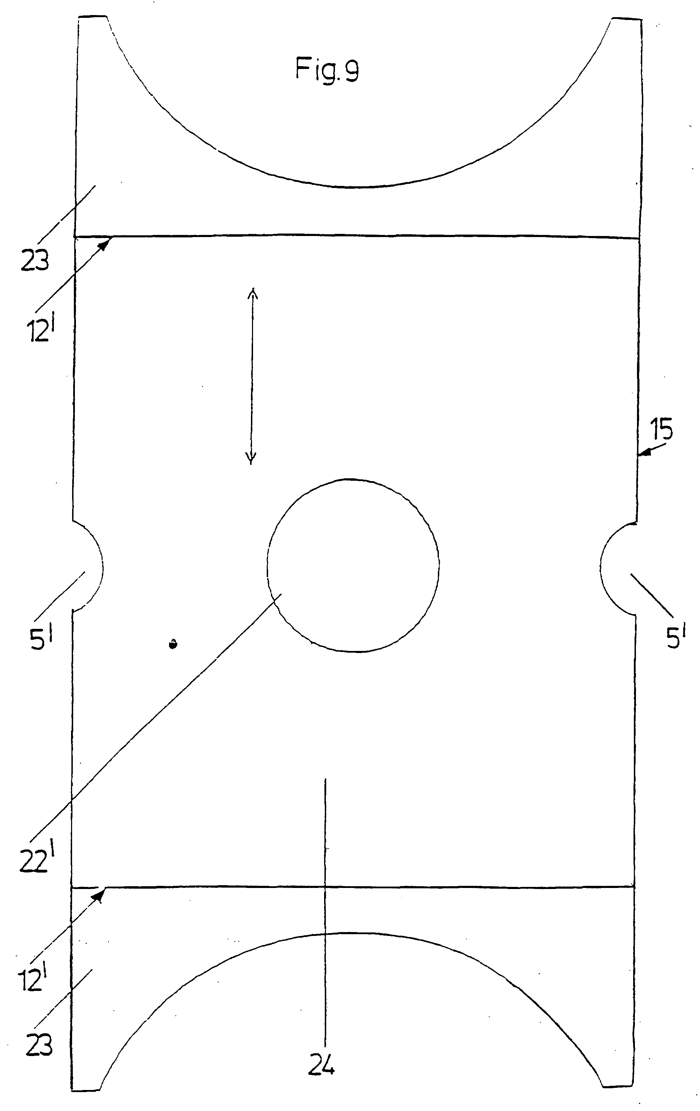

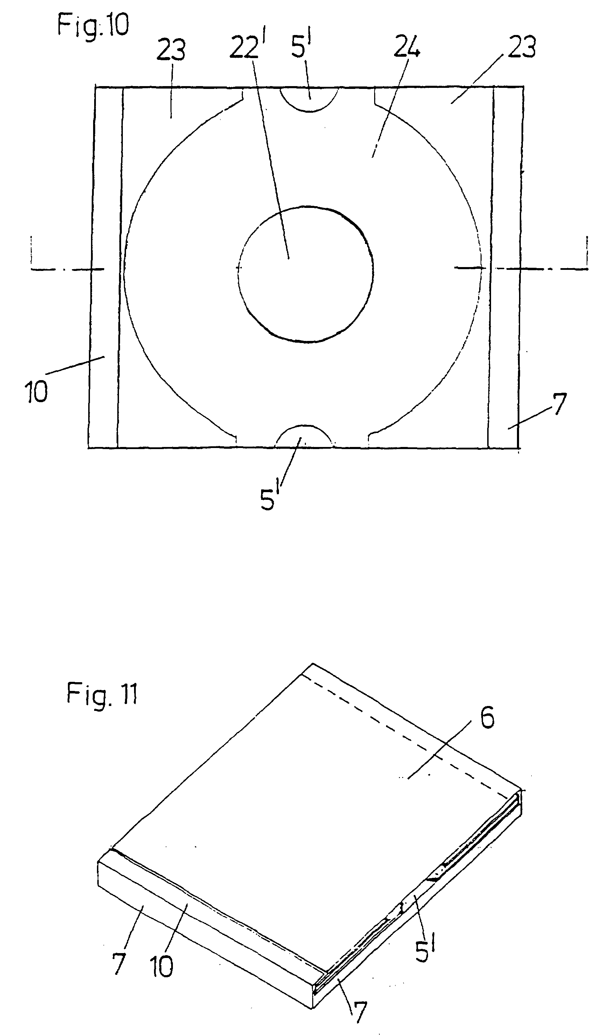

Verwendet man anstelle des in Fig. 8 gezeigten Halte- und Aufnahmeteiles 15 den Aufnahmeteil 15 gemäß Fig. 9, so erhält man mit einem Bodenteil, gemäß den Fig. 6, 7, und einem Umschlagteil, gemäß Fig. 2, einen Träger, der insbesondere für die Verpackung einer Audio-CD geeignet ist. Dieser Träger ist in den Fig. 10, 11 dargestellt. Er weist eine ebene Auflage 24 für die CD auf. Ein mittlerer kreisförmiger Bereich 22' ist abgesetzt, weil die Audio-CD's üblicherweise an der Unterseite einen Grat aufweisen, der vorsteht. Durch die Absenkung 22' wird erreicht, daß die CD trotz dieses Grates satt auf der Fläche 24 aufliegt und von den seitlichen Erhebungen 23 zentriert gehalten werden kann. Zum Herausnehmen sind zur Seite hin offene Ausnehmungen 5' vorgesehen.

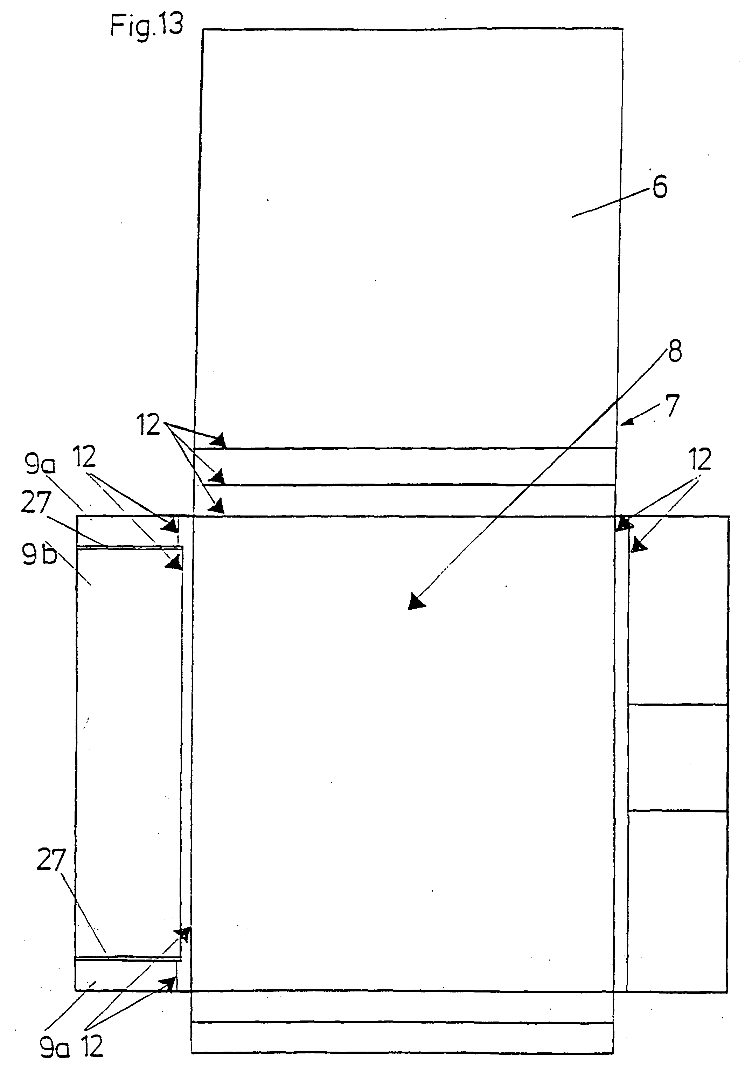

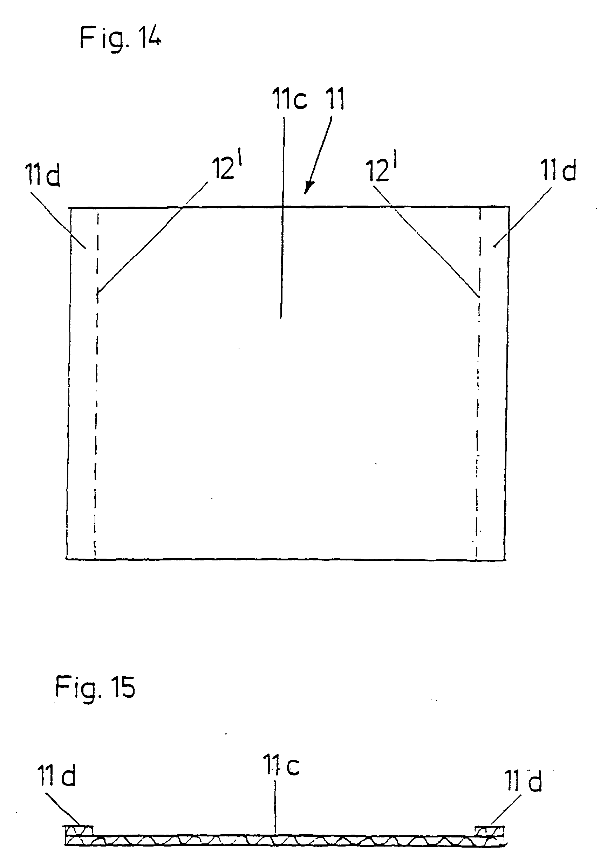

Die in Fig. 12 dargestellte Verpackung unterscheidet sich von der gemäß Fig. 5 im wesentlichen darin, daß sie im Bodenteil einen seitlich offenen Hohlraum 26 aufweist, in dem ein Beipackheft einschiebbar ist. Der Hohlraum ist über die große zentrale Öffnung 20 auch von oben zugänglich, womit sich auch ein vollständig eingeschobenes Heft nach außen schieben läßt. Um den Hohlraum zu bilden, weist der Bodenteil gemäß den Fig. 14, 15 neben einem mittleren Abschnitt 12c zwei schmale äußere Abschnitte 11d auf, die entlang von Ritzungen 12' hochklappbar sind, um einen Bodenteil gemäß Fig. 15 zu bilden. Zwischen den beiden schmalen Teilen 11d ist nun oberhalb des Teiles 11c Platz für ein Beipackheft. Abgesehen vom Bodenteil 11 muß auch der Umschlagteil 7, ausgehend von der Fig. 2, geringfügig geändert werden, wie dies in Fig. 13 dargestellt ist. Die Änderung besteht im wesentlichen darin, daß im linken abstehenden Lappen Einschnitte 27 vorgesehen sind, die es erlauben, den Lappenteil 9b auf den Bodenteil 11c einzuschlagen und die beiden seitlichen Lappenteile 9a auf die höherliegenden Bodenteile 11d einzuschlagen, sodaß seitlich eine Öffnung zum Hohlraum 26 bleibt.

Bei der Herstellung einer solchen Verpackung ist es zweckmäßig, in den Platz für den Hohlraum 26 bzw. des Beipackheftes zwischenzeitlich eine Einlage einzulegen, um zu verhindern, daß beim Verkleben und Verpressen der Hohlraum zusammengedrückt wird. Die Einlage wird nachher aus der verklebten Verpackung wieder entfernt.

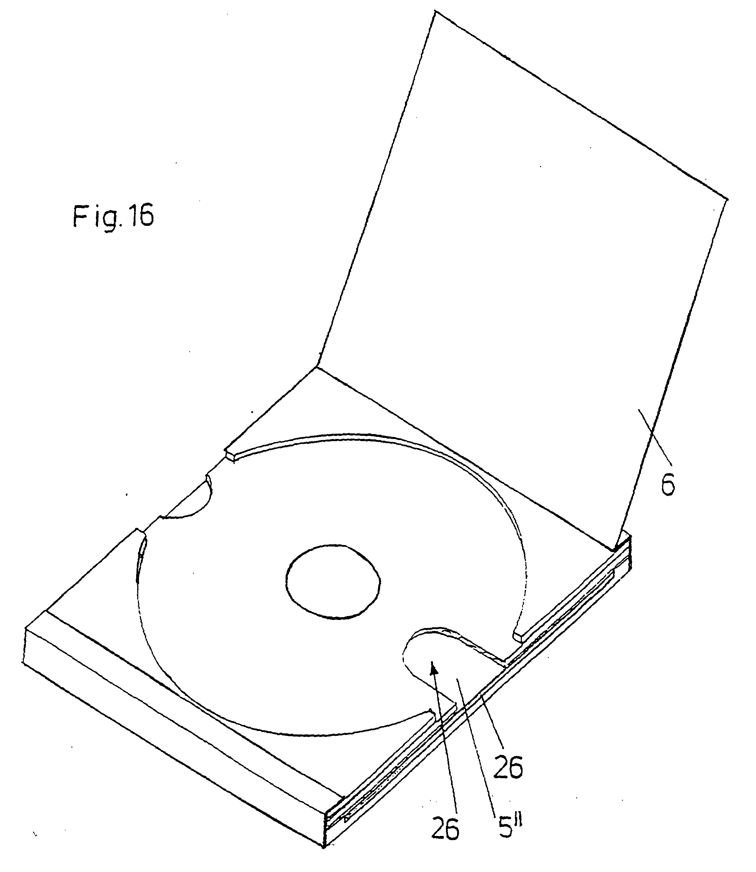

Gemäß Fig. 16 kann ein seitlich zugänglicher Hohlraum 26 auch bei einer Verpackung für eine Audio-CD, wie sie im wesentlichen in den Fig. 10, 11 dargestellt ist, vorgesehen sein. Der Umschlagteil kann dem der Fig. 13 entsprechen, der Bodenteil dem der Fig. 14 und der Halte- und Aufnahmeteil im wesentlichen dem der Fig. 9, wobei allenfalls das rechte Griffloch 5' zu einem länglichen Loch 5" vergrößert ist, um die Herausnahme eines in den Hohlraum eingelegten Heftes zu erleichtern.

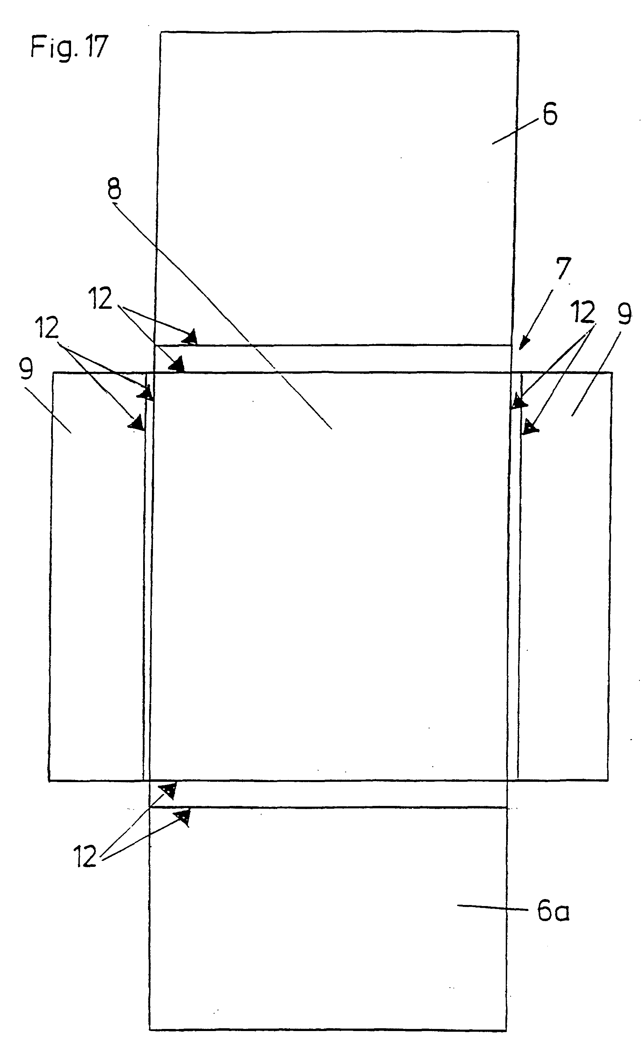

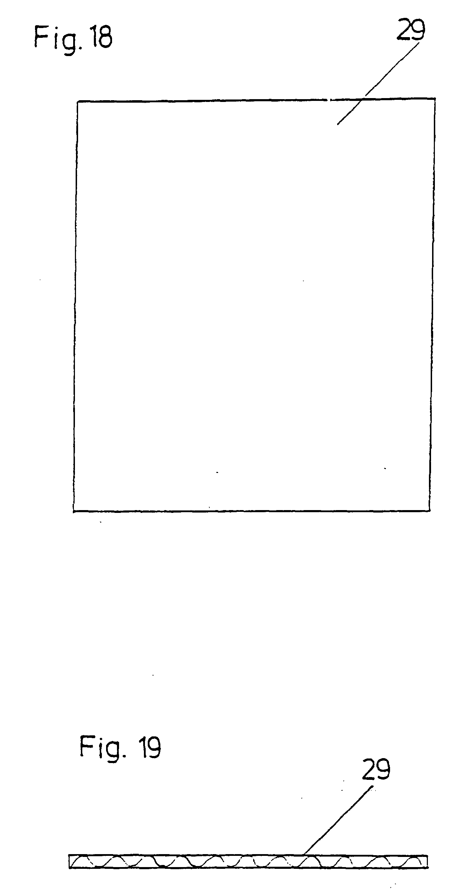

Bei dem Ausführungsbeispiel gemäß Fig. 17 kann ein Halte- und Aufnahmeteil gemäß Fig. 9 eingesetzt werden. Der Boden besteht einfach aus einer rechteckigen Platte 29, wie sie in den Fig. 18, 19 dargestellt ist. Der Umschlagteil gemäß Fig. 17 weist neben dem Deckel 6 einen zweiten Deckel 6a auf. Beim Zusammenbau wird der Teil 29 auf den mittleren Bereich 8 aufgelegt und dann die Teile 9 eingeklappt und festgeklebt. Daraufhin kann ein Halte- und Aufnahmeteil gemäß Fig. 9 aufgeklebt werden und anschließend die Deckel 6, 6a hochgeklappt werden.

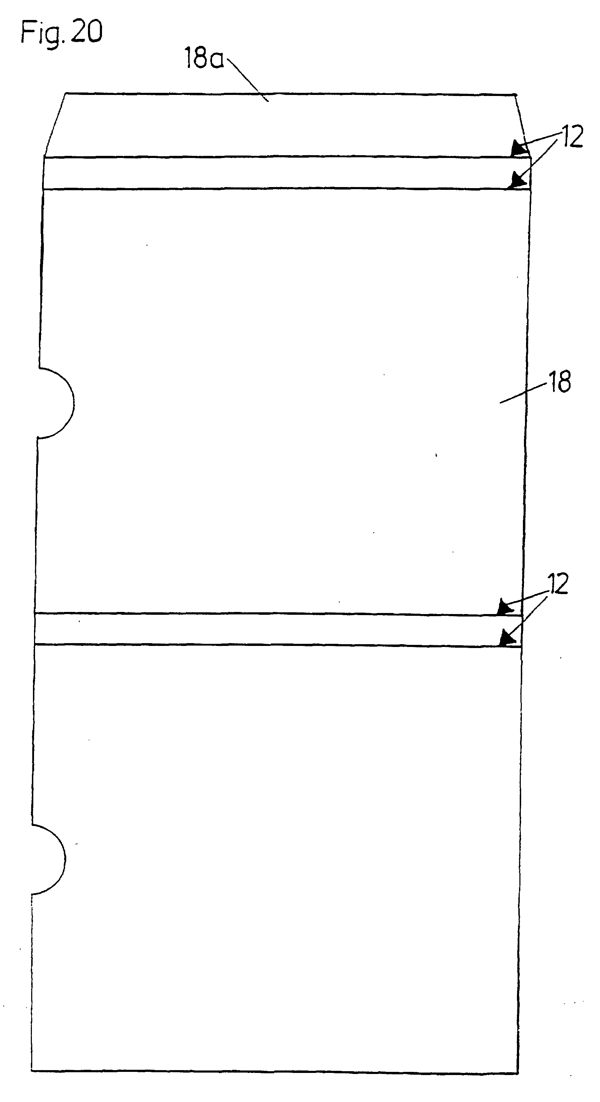

Die Fig. 20 zeigt den Zuschnitt einer Hülle 18, die ebenfalls aus Karton ausgestanzt werden kann. Die Hülle 18 weist Rillungen 12 an den späteren Faltstellen auf und besitzt außerdem eine Klebelasche 18a.

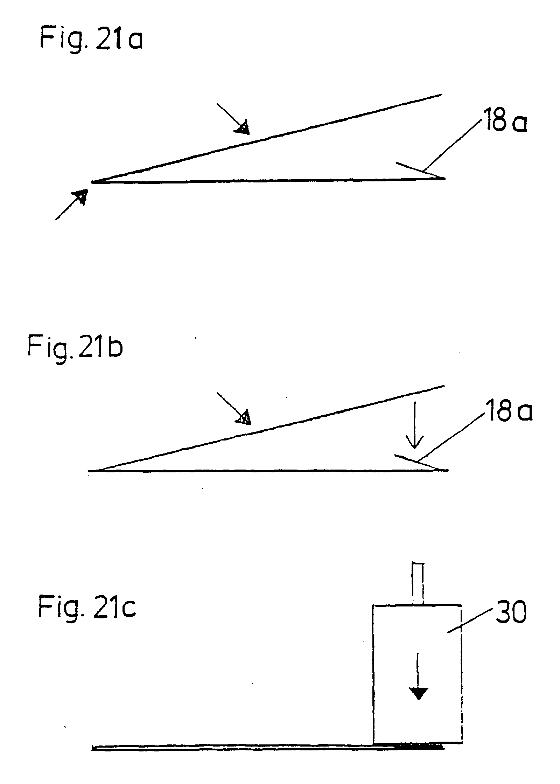

Zur Bildung einer zweiseitig offenen geschlossenen Hülle, wie sie in Fig. 22 dargestellt ist, wird die Klebelasche 18a eingefaltet, mit Kleber bestrichen und anschließend mit einem Gewicht 30 belastet, wie dies in den Fig. 21a bis 21c gezeigt ist.

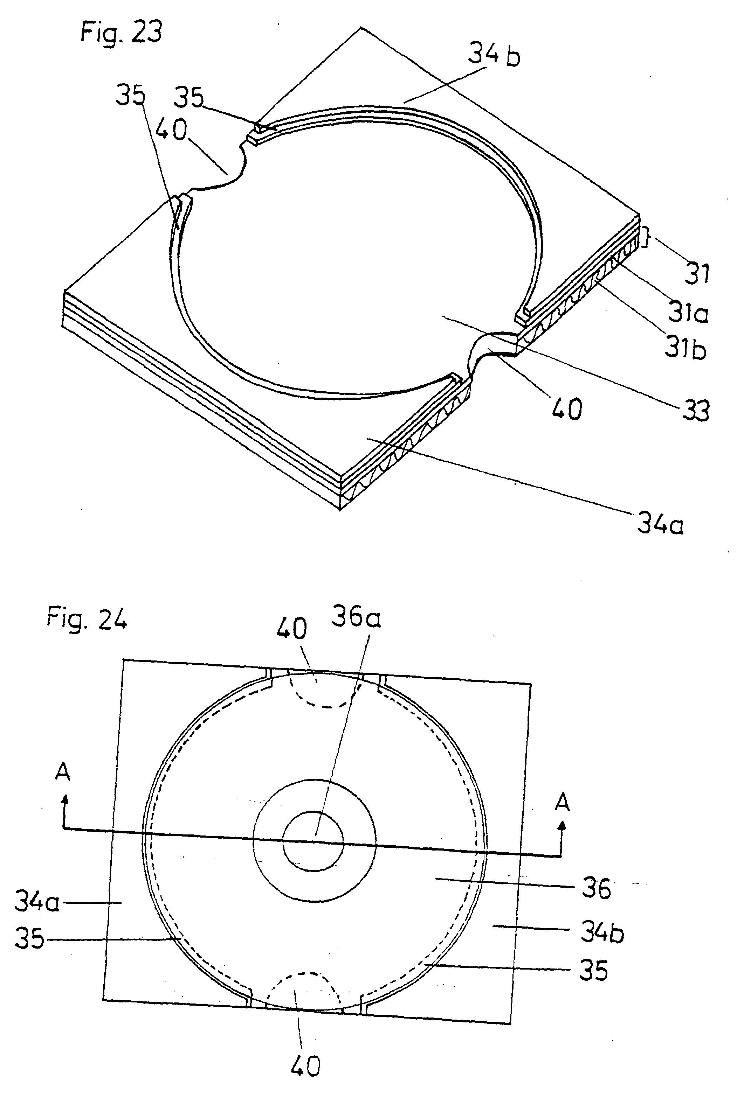

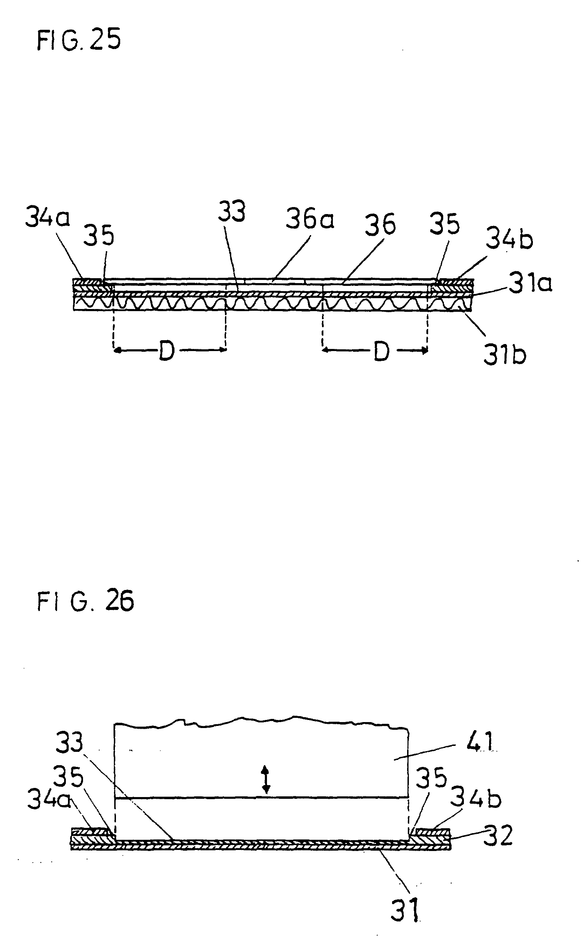

Der in Fig. 23 gezeigte Träger einer Verpackung weist einen Grundkörper 31 aus Wellpappe 31a und eine Zwischenlage 31b mit einer ebenen Oberfläche auf. Auf diese Oberfläche sind zwei Kartonstücke aufgeklebt, die die Auflagen 35 für die CD bereitstellen. Auf diese Kartonstücke sind zwei Erhebungen 34a und 34b in Form von weiteren Kartonstücken aufgeklebt, deren Dicke der Dicke der CD entspricht. Die zwischen den Erhebungen 34a und 34b freie Fläche der Kartonstücke darunter bildet die stufenförmige Auflage 35 für die CD. Die Oberfläche 33 der Zwischenlage 31b ist gegenüber der Auflage 35 abgesenkt (Fig. 23 und 25), sodaß die CD nur außerhalb des Datenbereiches D aufliegt.

Die Erhebungen 34a und 34b sind in ihrer Form an den Umfangsrand der Speicherplatte (CD) angepaßt und weisen dazu in der Draufsicht kreisbogenförmige Anlageabschnitte auf. Der Bogenradius dieser Anlageabschnitte ist vorzugsweise geringfügig größer als oder im wesentlichen gleich wie der Radius der einzulegenden Speicherplatte 36. Damit kann zwischen den als Zentriervorrichtungen wirkenden Erhebungen 34a und 34b und der in die Verpackung eingelegten Speicherplatte 36 (vgl. Fig. 24) ein geringfügiges Spiel vorhanden sein. Dies erleichtert ein Einlegen und Herausnehmen der CD, da diese im Gegensatz zu den bisher üblichen Kronenaufnehmern nicht mehr kraftschlüssig festgeklemmt ist. Durch die Ausbildung der Auflagefläche 35 aus Karton kann die CD auch mit der an sich empfindlichen Unterseite ohne Gefahr einer Beschädigung des Datenbereiches D lagesicher aufliegen. Im Träger 31 sind in der Draufsicht zwei gegenüberliegende Einbuchtungen bzw. Ausnehmungen 40 vorgesehen. Diese verlaufen, wie die Fig. 24 zeigt, unter die Speicherplatte 36 hinein, sodaß der Rand der Speicherplatte 36 mit zwei Fingern leichter erfaßbar ist und damit die Speicherplatte 36 einfach vom Träger 31 abgehoben werden kann.

Auf den rechteckigen Grundkörper 31 werden die beiden Kartonstücke mit den Auflagen 35 und dann die beiden Kartonstücke 34a und 34b aufgeklebt. Da ihr Außenrand an drei Seiten mit dem Grundkörper übereinstimmt, ist eine einfache Ausrichtung der aufgeklebten Teile am Grundkörper 31 möglich, sodaß eine rasche maschinelle Herstellung sichergestellt ist. Die Zwischenlage 31b kann bei entsprechender Ausbildung der Oberseite der Lage 31a aus Wellpappe sogar entfallen. Die Wellpappe 31a erlaubt es, bei geringem Gewicht eine hohe Steifigkeit zu erzielen. Auch die Teile 31b, 34a und 34b können aus Wellpappe (geringerer Dicke) hergestellt sein.

Die offenen Seiten der Wellpappe können im Bedarfsfall durch eine nicht näher dargestellte Abdeckung abgedeckt sein.

Nachdem die CD 36, wie in Fig. 24 oder 25 gezeigt, auf die Auflagefläche 33 zwischen die Erhebungen 34a und 34b eingelegt worden ist, kann diese Einheit in eine Hülle oder Schachtel aus Karton eingeschoben werden. Ein Ausführungsbeispiel einer Hülle aus Karton ist in Fig. 22 dargestellt.

Die Fig. 26 zeigt die Herstellung eines weiteren besonders einfachen und exakt herstellbaren Ausführungsbeispiels. Auf einem Grundträger 31 ist eine durchgehende Kartonlage 32 aufgeklebt. Auf der Kartonlage 32 sind die Erhebungen 34a, 34b, vorzugsweise ebenfalls aus Karton, aufgeklebt. Um eine Auflage 35 zu erzielen, die die Speicherplatte nur außerhalb ihres Datenbereichs D unterstützt, wird mittels eines Stempels 41 einfach die Kartonlage 32 in ihrem mittleren Bereich mit einer kreisförmigen Einbuchtung versehen, sodaß im mittleren Bereich eine abgesenkte Oberfläche 33 vorhanden ist und vorhanden bleibt, nachdem der zylinderförmige Stempel wieder entfernt worden ist. Die Absenkung der abgesenkten Fläche 33 gegenüber der stufenförmigen Auflage 35 braucht nur gering sein. Es geht ja nur darum, daß der Datenbereich D der Speicherplatte 36 nicht direkt auf dem Karton der Verpackung aufliegt.

Alle Bauteile der erfindungsgemäßen Verpackung können auch aus Altpapier bzw. Altkarton hergestelltem Recyclingkarton gefertigt sein, womit die Umweltbelastung ingesamt noch weiter verringert wird.

## Patentansprüche

1. Verfahren zur Herstellung von Verpackungen für Speichermedien, insbesondere optische Speicherplatten oder Disketten, **gekennzeichnet durch** folgende Schritte:
a) Bilden eines Bodenteiles (11) aus einer oder mehreren verklebten Kartonschichten (11a, 11b),
b) Bilden eines Umschlagteiles (7) aus Karton,
c) Bilden eines Halte- und Aufnahmeteiles (15) für das Speichermedium aus Karton,
d) Verkleben der so gebildeten Teile (7, 11, 15), wobei der Halte- und Aufnahmeteil (15) über dem Bodenteil (11) angeordnet wird und der Umschlagteil (7) zumindest einen Teil der seitlichen Ränder von Halte- und Aufnahmeteil (15) und/oder Bodenteil (11) abdeckt.

2. Verfahren nach Anspruch 1, **dadurch gekennzeichnet, daß** der Umschlagteil (7) unter dem Bodenteil (11) verläuft und seitlich über den Bodenteil (7) überstehende Abschnitte (9, 10) des Umschlagteiles (7) nach oben umgeschlagen und festgeklebt werden, wobei die Abschnitte (9, 10) zumindest zwei gegenüberliegende Seitenränder des Bodenteiles (11) und des darüberliegenden Halte- und Aufnahmeteiles (15) abdecken.

3. Verfahren nach Anspruch 1 oder 2, **dadurch gekennzeichnet, daß** der Bodenteil (11) beim Ausstanzen geritzt und anschließend um die geritzte Stelle (12') gefaltet wird, um einen zweilagigen Bodenteil zu bilden.

4. Verfahren nach Anspruch 3, **dadurch gekennzeichnet, daß** der Bodenteil entlang zweier zum Rand paralleler Linien (12') geritzt wird und die beiden außerhalb der Ritzung liegenden, schmalen Abschnitte nach oben eingeschlagen werden.

5. Verfahren nach einem der Ansprüche 1 bis 4, **dadurch gekennzeichnet, daß** aus dem Bodenteil (11) eine mittlere Öffnung (13) ausgestanzt wird, vorzugsweise bevor dieser gefaltet wird.

6. Verfahren nach einem der Ansprüche 1 bis 5, **dadurch gekennzeichnet, daß** in den Bodenteil (11) ein abgesenkter Bereich (14) eingeprägt wird.

7. Verfahren nach einem der Ansprüche 1 bis 6, **dadurch gekennzeichnet, daß** der Umschlagteil (7) mit einem Bodenabschnitt (8) verwendet wird, der in den Abmessungen dem Bodenteil (11) entspricht, wobei vom Bodenteil (11) vier Lappen (6, 9, 10) abstehen, welche vorzugsweise nach Eindrücken von Faltrillen (12) nach oben umgeschlagen und festgeklebt werden.

8. Verfahren nach einem der Ansprüche 1 bis 7, **dadurch gekennzeichnet, daß** ein Umschlagteil (7) verwendet wird, von dem ein Lappen absteht, der nach dem Umschlagen nach oben einen die Oberseite des Halte- und Aufnahmeteiles (15) abdeckenden, hochklappbaren Deckel (6) bildet.

9. Verfahren nach einem der Ansprüche 1 bis 8, **dadurch gekennzeichnet, daß** ein Halte- und Aufnahmeteil (15) mit einem Mittelteil und zwei seitlichen Lappen (4) verwendet wird, die - vorzugsweise nach Eindrücken von Faltrillen (12) oder Ritzungen - nach oben auf den Mittelteil umgeschlagen werden, um ein im mittleren Bereich des Mittelteiles aufliegendes Speichermedium zentriert zu halten.

10. Verfahren nach einem der Ansprüche 1 bis 9, **dadurch gekennzeichnet, daß** auf der Oberseite des Halte- und Aufnahmeteiles (15) ein abgesenkter Bereich eingeprägt wird.

11. Verfahren nach einem der Ansprüche 1 bis 10, **dadurch gekennzeichnet, daß** zum Verkleben ein Dispersionskleber und/oder ein thermoaktivierbarer Kleber (Hotmelt) verwendet wird.

12. Verfahren nach Anspruch 11, **dadurch gekennzeichnet, daß** zum Verkleben gleichzeitig ein punktförmig aufgetragener, thermoaktivierbarer Kleber (Hotmelt) und ein flächig aufgetragener Dispersionskleber verwendet werden.

13. Verpackung für Speichermedien, insbesondere optische Speicherplatten oder Disketten, mit einem Träger (1) aus mindestens einer Lage Karton mit einer Vertiefung zum Einlegen des Speichermediums, wobei der Träger (1) vorzugsweise in eine beidseitig offene Hülle (18) aus Karton einschiebbar ist, und wobei der Träger (1) für das Speichermedium einen ein- oder mehrlagigen Bodenteil (11) aus Karton und einen darüberliegenden, mit einer Vertiefung versehenen, ebenfalls ein- oder mehrlagigen Halteteil (15) aus Karton aufweist, **dadurch gekennzeichnet, daß** der Träger weiters einen Umschlagteil (7) aufweist, der unter dem Bodenteil (11) verläuft und von dort um die Ränder des Bodenteils (11) und zumindest teilweise des Halteteiles (15) nach oben umgeschlagen und verklebt ist.

14. Verpackung nach Anspruch 13, **dadurch gekennzeichnet, daß** der Umschlagteil an zwei gegenüberliegenden Rändern zwischen Bodenteil (11) und Halteteil (15) eingeschlagen ist und zwei seitliche Ränder des Bodenteils abdeckt.

15. Verpackung nach Anspruch 13 oder 14, **dadurch gekennzeichnet, daß** der Umschlagteil (7) an zwei gegenüberliegenden Seiten des Trägers (1) über den Bodenteil und den darüberliegenden Halteteil (15) umgeschlagen und an letzterem festgeklebt ist.

16. Verpackung nach einem der Ansprüche 13 bis 15, **dadurch gekennzeichnet, daß** der Träger (1) aus Karton einen Klappdeckel (6) aufweist, mit dem die Vertiefung oben abdeckbar ist, wobei der Klappdeckel (6) vorzugsweise von einem einseitig freien Lappen des Umschlagteiles (7) gebildet ist.

17. Verpackung nach einem der Ansprüche 13 bis 16, insbesondere für eine Compact Disc, wobei die Speicherplatte (36) auf einem vorzugsweise kreisringförmigen Datenbereich ihrer Unterseite optisch auslesbare Daten enthält, **dadurch gekennzeichnet, daß** die Verpackung eine Auflage (35) für die Speicherplatte (36) aufweist, auf der die Unterseite der Speicherplatte (36) mit ihrem radial äußersten Randbereich außerhalb des Datenbereiches (D) aufliegt, während der Datenbereich (D) und radial innerhalb liegende datenfreie Bereich mit Abstand von der Verpackung angeordnet sind.

18. Verpackung nach einem der Ansprüche 13 bis 17, **dadurch gekennzeichnet, daß** sie im Träger aus zwei oder mehreren Lagen Karton einen von der Seite zugänglichen Hohlraum, beispielsweise zum Aufnehmen eines Beipackheftes, aufweist, wobei der Hohlraum auch von der Oberseite des Trägers (1) her zugänglich ist.

19. Verpackung für Disketten, insbesondere 3½ Zoll-Disketten, **gekennzeichnet durch** einen Träger (1) aus Karton mit einer rechteckigen Vertiefung (2), in die mindestens eine Diskette einlegbar ist.

20. Verpackung nach Anspruch 19, **dadurch gekennzeichnet, daß** der Träger (1) einen ebenfalls aus Karton bestehenden Klappdeckel (6) aufweist, der die Vertiefung (2) oben abdeckt und am restlichen Träger (1) klappbar gelagert ist.

21. Verpackung nach Anspruch 19 oder 20, **dadurch gekennzeichnet, daß** der Träger (1) mehrere übereinanderliegende, zumindest teilweise verklebte Lagen aus Karton aufweist, wobei zumindest die oberste Lage eine durchgehende Öffnung aufweist, deren der Form der Diskette angepaßte Innenrand die Vertiefung (2) seitlich begrenzt, und daß eine darunterliegende Lage im wesentlichen durchgehend ausgebildet ist und den Boden der Vertiefung (2) bildet.

## Claims

1. A process for the production of packaging for storage media, in particular optical storage disks or diskettes, **characterised by** the following steps:
a) forming a bottom portion (11) from one or more glued cardboard layers (11a, 11b),
b) forming a jacket portion (7) from cardboard,
c) forming a holding and receiving portion (15) for the storage medium from cardboard,
d) glueing the portions (7, 11, 15) formed in that way, wherein the holding and receiving portion (15) is arranged over the bottom portion (11) and the jacket portion (7) covers at least a part of the lateral edges of the holding and receiving portion (15) and/or the bottom portion (11).

2. A process according to claim 1 **characterised in that** the jacket portion (7) extends under the bottom portion (11) and sections (9, 10) of the jacket portion (7), which project laterally beyond the bottom portion (7) are folded over upwardly and are glued fast, wherein the sections (9, 10) cover at least two oppositely disposed side edges of the bottom portion (11) and the holding and receiving portion (15) disposed thereabove.

3. A process according to claim 1 or 2 **characterised in that** the bottom portion (11) is scored in a stamping out operation and then folded around the scored position (12') in order to form a two-layer bottom portion.

4. A process according to claim 3 **characterised in that** the bottom portion is scored along two lines (12') which are parallel to the edge and the narrow sections which lie outside the scoring are turned in upwardly.

5. A process according to one of claims 1 to 4 **characterised in that** a central opening (13) is stamped out of the bottom portion (11), preferably before it is folded.

6. A process according to one of claims 1 to 5 **characterised in that** a depressed region (14) is embossed into the bottom portion (11).

7. A process according to one of claims 1 to 6 **characterised in that** the jacket portion (7) is used with a bottom section (8) which corresponds in its dimensions to the bottom portion (11), wherein projecting from the bottom portion (11) are four flaps (6, 9, 10) which, preferably after fold grooves (12) have been impressed, are folded over upwardly and glued fast.

8. A process according to one of claims 1 to 7 **characterised in that** a jacket portion (7) is used, from which there projects a flap which, after being folded over upwardly, forms an upwardly pivotable cover (6) which covers over the top side of the holding and receiving portion (15).

9. A process according to one of claims 1 to 8 **characterised in that** a holding and receiving portion (15) having a central part and two lateral flaps (4) is used, which - preferably after an operation of impressing folding grooves (12) or scorings - are folded over upwardly on to the central part in order to hold in centred relationship a storage medium which is supported in the central region of the central part.

10. A process according to one of claims 1 to 9 **characterised in that** a depressed region is embossed on the top side of the holding and receiving portion (15).

11. A process according to one of claims 1 to 10 **characterised in that** a dispersion adhesive and/or a heat-activatable adhesive (hot melt) is used for the glueing operation.

12. A process according to claim 11 **characterised in that** a heat-activatable adhesive (hot melt) which is applied in punctiform manner and a dispersion adhesive which is applied over an area are simultaneously used for the glueing operation.

13. A packaging for storage media, in particular optical storage disks or diskettes, with a carrier (1) comprising at least one layer of cardboard with a depression for the insertion of the storage medium, wherein the carrier (1) can be preferably inserted into a cardboard case (18), which is open at both sides and wherein the carrier (1) for the storage media comprises a bottom portion (11) of one or more layers of cardboard and a holding portion (15) which is disposed above the bottom portion and which is provided with a depression and which also has one or more layers of cardboard, **characterised in that** the carrier also provides a jacket portion (7) which extends under the bottom portion (11) and which from there is folded over upwardly around the edges of the bottom portion (11) and at least partially of the holding portion (15) and glued.

14. A packaging according to claim 13 **characterised in that** the jacket portion is turned in at two oppositely disposed edges between the bottom portion (11) and the holding portion (15) and covers two lateral edges of the bottom portion.

15. A packaging according to claim 13 or 14 **characterised in that** the jacket portion (7) is folded over at two oppositely disposed sides of the carrier (1)over the bottom portion and the holding portion (15) disposed thereabove, and glued fast to the holding portion.

16. A packaging according to one of claims 13 to 15 **characterised in that** the carrier (1) made of cardboard has a flap cover (6) with which the depression can be covered over at the top, wherein the flap cover (6) is preferably formed by a flap which is free at one side of the jacket portion (7).

17. A packaging according to one of claims 13 to 16, in particular a compact disk, wherein the storage disk (36) contains optically readable data on a preferably annular data region of its underside, **characterised in that** the packaging has a support (35) for the storage disk (36), on which the underside of the storage disk (36) is supported with its radially outermost edge region outside the data region (D) while the data region (D) and the data-free region disposed radially within are arranged at a spacing from the packaging.

18. A packaging according to one of claims 13 to 17 **characterised in that** it comprises a space in the carrier made of two or more layers of cardboard which is accessible from the side e.g. for taking up an enclosed booklet, wherein the space is also accessible from the top side of the carrier (1).

19. A packaging for diskettes, in particular 3 ½ inch diskettes, **characterised by** a carrier (1) made of cardboard with a rectangular depression (2) into which at least one diskette can be laid.

20. A packaging according to claim 19 **characterised in that** the carrier (1) has a flap cover (6) which also comprises cardboard and which covers over the depression (2) at the top and which is mounted pivotably on the remainder of the carrier (1).

21. A packaging according to claim 19 or 20 **characterised in that** the carrier (1) has a plurality of superposed, at least partially glued layers of cardboard, wherein at least the uppermost layer has a through opening whose inside edge, which is adapted to the form of the disk, laterally delimits the depression (2), and that a subjacent layer is of a substantially continuous configuration and forms the bottom of the depression (2).

## Revendications

1. Procédé de fabrication d'emballages pour supports d'enregistrements, en particulier pour des disques d'enregistrements ou des disquettes, **caractérisé par** les étapes suivantes :
a) réalisation d'un fond (11) formé par une ou plusieurs couches de carton (11a, 11b) collées,
b) réalisation d'une partie rabattable (7) en carton,
c) réalisation d'une partie de réception (15) en carton destiné à recevoir le support d'enregistrements,
d) collage des parties ainsi formées (7, 11, 15), la partie de réception (15) étant disposée au-dessus du fond (11) et la partie rabattable (7) recouvrant au moins une partie des bords latéraux de la partie de réception (15) et/ou du fond (11).

2. Procédé selon la revendication 1, **caractérisé en ce que** la partie rabattable (7) s'étend en dessous du fond (11) et des sections (9, 10) de la partie rabattable (7), formant des saillies latérales au-dessus du fond (11), sont repliées vers le haut et collées, les saillies (9, 10) recouvrant au moins deux bords latéraux opposés du fond (11) et de la partie de réception (15) disposée au-dessus.

3. Procédé selon la revendication 1 ou 2, **caractérisé en ce que** le fond (11) est incisé au cours de la découpe et, ensuite, est plié autour de la zone incisée (12'), afin de former un fond à deux couches.

4. Procédé selon la revendication 3, **caractérisé en ce que** le fond est incisé le long de deux lignes (12') parallèles au bord et les deux parties étroites, situées en dehors de la zone incisée, sont repliées vers le haut.

5. Procédé selon une des revendications 1 à 4, **caractérisé en ce qu'**une ouverture (13) centrale est découpée dans le fond (11), de préférence avant que celui-ci ne soit plié.

6. Procédé selon une des revendications 1 à 5, **caractérisé en ce qu'**une zone en creux (14) est estampée dans le fond (11).

7. Procédé selon une des revendications 1 à 6, **caractérisé en ce que** l'on utilise une partie rabattable (7) munie d'une partie de fond (8), dont les dimensions correspondent à celles du fond (11), sachant que quatre pattes (6, 9, 10) forment des saillies sur le fond (11), lesquelles sont repliées vers le haut, de préférence après la gravure de rainures de pliage (12), et sont collées.

8. Procédé selon une des revendications 1 à 7, **caractérisé en ce que** l'on utilise une partie rabattable (7) avec une patte en saillie, qui après avoir été repliée vers le haut forme un couvercle (6) rabattable vers le haut et recouvrant la face supérieure de la partie de réception (15).

9. Procédé selon une des revendications 1 à 8, **caractérisé en ce que** l'on utilise une partie de réception (15) munie d'une partie centrale et de deux pattes (4) latérales, qui - de préférence après la gravure de rainures de pliage (12) ou d'incisions - sont repliées vers le haut sur la partie centrale, afin de maintenir en position centrée un support d'enregistrements posé au centre de la partie centrale.

10. Procédé selon une des revendications 1 à 9, **caractérisé en ce qu'**une zone en creux est estampée dans la face supérieure de la partie de maintien et de réception (15).

11. Procédé selon une des revendications 1 à 10, **caractérisé en ce que** pour le collage on utilise une colle à dispersion et/ou une colle thermo-activable (hotmelt).

12. Procédé selon la revendication 11, **caractérisé en ce que** pour le collage on utilise en même temps une colle thermo-activable (homelt), déposée en forme de points et une colle à dispersion appliquée sur toute une surface.

13. Emballage pour supports d'enregistrements, en particulier des disques optiques numériques ou des disquettes, comprenant un support (1) formé par au moins une couche de carton avec une dépression destinée à recevoir le support d'enregistrements, le support (1) pouvant être inséré de préférence dans une pochette (18) ouverte sur deux côtés, et le support (1) du support d'enregistrements étant formé par un fond (11) de carton formé par une ou plusieurs couches et une partie de maintien de carton (15) également formée par une ou plusieurs couches et munie d'une dépression, **caractérisé en ce que** le support comporte en outre une partie rabattable (7), qui s'étend en dessous du fond (11) et, à partir de là, *est* repliée vers le haut autour des, bords du fond (11) et au moins en partie autour de la partie de maintien (15) et y est collée.

14. Emballage selon la revendication 13, **caractérisé en ce que** la partie rabattable est repliée sur deux bords opposés entre le fond (11) et la partie de maintien (15) et recouvre deux bords latéraux du fond.

15. Emballage selon la revendication 13 ou 14, **caractérisé en ce que** la partie rabattable (7) est repliée sur deux côtés opposés du support (1) au-dessus du fond et de la partie de maintien (15) située au-dessus et est collée contre cette dernière.

16. Emballage selon une des revendications 13 à 15, **caractérisé en ce que** le support (1) est muni d'un couvercle rabattable (6) en carton, qui recouvre le dessus de la dépression, le couvercle rabattable (6) étant formé de préférence par une patte libre disposée sur un côté de la partie rabattable (7).

17. Emballage selon une des revendications 13 à 16, en particulier pour un disque compact, le disque (36) d'enregistrements contenant des données à lire par voie optique dans une zone de préférence circulaire de sa face inférieure, **caractérisé en ce que** l'emballage comporte un appui (35) pour le disque d'enregistrements (36), sur lequel est posée la face inférieure du disque d'enregistrements (36) avec sa zone de bordure extérieure dans le sens radial, en dehors de la zone de données (D), alors que la zone de données (D) et la zone sans données, située vers l'intérieur dans le sens radial, sont ménagées avec un écart à l'emballage.

18. Emballage selon une des revendications 13 à 17, **caractérisé en ce qu'**il comporte dans le support formé par deux ou plusieurs couches de carton une cavité accessible par le côté, destinée à recevoir par exemple une jaquette en forme de livret, la cavité étant accessible également par la face supérieure du support (1).

19. Emballage pour disquettes, en particulier pour des disquettes 3 pouces 1/2, **caractérisé par** un support (1) en carton avec une dépression (2) carrée, dans lequel peut être posée une disquette.

20. Emballage selon la revendication 19, **caractérisé en ce que** le support (1) comporte également un couvercle rabattable (6) en carton, qui recouvre le dessus de la dépression (2) et est posé contre la partie restante du support (1) de manière à pouvoir se rabattre.

21. Emballage selon la revendication 19 ou 20, **caractérisé en ce que** le support (1) comporte plusieurs couches de carton superposées, encollées au moins en partie, au moins la couche supérieure étant munie d'une ouverture débouchante, dont le bord intérieur adapté à la forme .de la disquette délimite latéralement la dépression (2), et **en ce que** la couche sous-jacente est conçue sensiblement en continu et forme le fond de la dépression (2).
